# EUROPÄISCHE PATENTSCHRIFT

(11) **EP 0 748 422 B1**
(45) Veröffentlichungstag und Bekanntmachung des Hinweises auf die Patenterteilung: **12.05.1999**
(21) Anmeldenummer: 95908921.0
(22) Anmeldetag: 09.02.1995
(51) Int. Cl.: F16B 35/04

(54) **VERBINDUNGSELEMENT MIT BEIDSEITIGEM GEWINDE**
CONNECTING ELEMENT THREADED ON BOTH SIDES
ELEMENT DE LIAISON FILETE DES DEUX COTES

(30) Priorität: 18.02.1994 DE 4405240
(43) Veröffentlichungstag der Anmeldung: 18.12.1996
(73) Patentinhaber: GIRBINGER, Max, 82216 Gernlinden (DE)
(72) Erfinder: GIRBINGER, Max, 82216 Gernlinden (DE)
(74) Vertreter: Bockhorni, Josef, Dipl.-Ing.
(86) Internationale Anmeldenummer: EP9500472
(87) Internationale Veröffentlichungsnummer: WO9522702

(56) Entgegenhaltungen:
- EP-A- 0 191 245
- CH-A- 679 324
- GB-A- 566 552
- US-A- 1 644 477
- US-A- 4 784 554

## Beschreibung

Die vorliegende Erfindung betrifft ein Verbindungselement mit beidseitigem Gewinde zur lösbaren Verbindung zweier Bauteile bzw. Objekte gemäß dem Oberbegriff von Anspruch 1.

Bekannt sind Verbindungselemente, bei denen sich in der Mitte eine Schraubenmutter und an den beiden gegenüberliegenden Enden jeweils ein Gewinde befinden. Diese Verbindungselemente sind aus einem Stück, z.B. durch Schmieden hergestellt. Das besondere Merkmal dieser Verbindungselemente liegt darin, daß ein Gewinde rechtsgängig, hingegen das andere Gewinde linksgängig ist, wodurch je nach Drehrichtung der Mutter zwei über Gewindesacklochbohrungen und die beiden Gewinde des Verbindungselementes verbundene Bauteile bzw. Objekte, sich voneinander entfernen oder aufeinander zubewegt werden. Diese Verbindungselemente zeichnen sich insbesondere dadurch aus, daß durch sie eine definierte Distanz zwischen den beiden Bauteile bzw. Objekten eingestellt werden kann.

Außerdem ist bekannt, daß diese Verbindungselemente aus einem Stück bestehen, wodurch aber ein eventuelles Fluchten der beiden Bauteile bzw. Objekte zueinander nicht ausgeglichen werden kann.

Ein entsprechendes Verbindungselement ist beispielsweise in dem Dokument EP-A-0.191.245 beschrieben. Ebenfalls einen Verbindungsbolzen mit jeweils einem Gewinde an seinem Ende beschreibt das Dokument GB 566 552, wobei hier allerdings die Gewinde die gleiche Gangrichtung aufweisen.

Des weiteren ergeben sich bei der Montage dieser bekannten Verbindungselemente zur lösbaren Verbindung der beiden Bauteile bzw. Objekte noch weitere Probleme. Um das Verbindungselement gleichzeitig in beide Bauteile bzw. Objekte einzuschrauben, müssen diese beiden Bauteile bzw. Objekte in einem Anfangsabstand, der zumindest so groß wie die Länge des Verbindungselementes ist, zueinander angeordnet werden. Dies ist an schwer zugänglichen Stellen unmöglich bzw. beschränkt erheblich die Einsatzmöglichkeit eines solchen Verbindungselements. Außerdem müssen die beiden Bauteile bzw. Objekte bei der Montage durch den starren, einstückigen Aufhau des Verbindungselementes zusätzlich noch exakt zueinander ausgerichtet werden.

Aus den Dokumenten US 1,644,477 und US 4,784,554 sind zweiteilige Verbindungselemente bekannt. Bei dem Verbindungselement entsprechend dem Dokument US 1,644,477 handelt es sich um zwei Gewindebolzen, die über eine Flansch-Schnappverbindung an jeweils einem Ende verbunden werden und an den gegenüberliegenden Enden Gewinde mit unterschiedlicher Gangrichtung aufweisen. Neben der unterschiedlichen Gangrichtung der Gewinde ist hier vor allem die ungünstige Flansch-Schnappverbindung nachteilhaft. Demgegenüber beschreibt das Dokument US 4,784,554 eine T-Bolzenanordnung, bei der der T-Bolzen über eine Gewindemuffe mit einem Gewindebolzen verschraubt wird. Auch diese Anordnung kann die oben beschriebenen Nachteile der bekannten Verbindungselemente nicht überwinden.

Somit ist es Aufgabe der vorliegenden Erfindung, die oben beschriebenen Nachteile bei einer lösbaren Verbindung von zwei Bauteilen bzw. Objekten zu verhindern, insbesondere ein auch an schwer zugänglichen Stellen einsetzbares, einfach und robust aufgebautes sowie leicht zu handhabendes Verbindungselement zu schaffen.

Diese Aufgabe wird durch ein aus mehreren zusammenfügbaren Teilen bestehendes Verbindungselement gelöst, dessen beide Gewindegänge gleichgängig sind, gemäß den im kennzeichnenden Teil von Anspruch 1 der zugehörigen Patentansprüche beschriebenen Merkmalen. Durch die vorliegende Erfindung ergibt sich eine deutliche Verringerung der Montagezeit und damit der Montagekosten. Ferner können unter Verzicht auf Durchgangsbohrungen auch Elemente untereinander verbunden werden, die sonst von keiner Seite bzw. nur schwer und/oder wegen geringen Raumverhältnissen umständlich zugänglich sind.

Nachfolgend wird eine bevorzugte Ausführungsform des erfindungsgemäßen Verbindungselementes unter Zuhilfenahme der beigefügten Zeichnungen beschrieben.

In diesen Zeichnungen zeigt
- Fig.1: im Schnitt das Verbindungselement im Montagezustand mit den beiden Bauteilen bzw. Objekten,
- Fig.2: eine Seitenansicht und einen Schnitt des zusammengefügten Verbindungselementes,
- Fig.3: den Aufbau der Basisschraube als Seitenansicht und im Schnitt den Aufbau der Sekundärschraube,
- Fig.4: die Überwurfmutter in der Draufsicht und im Schnitt,
- Fig.5: als Seitenansicht verschiedene Dimensionen des Basisgewindes der Basisschraube,
- Fig.6: verschiedene Gestaltungsformen der Überwurfmutter als Draufsicht und in Seitenansicht.

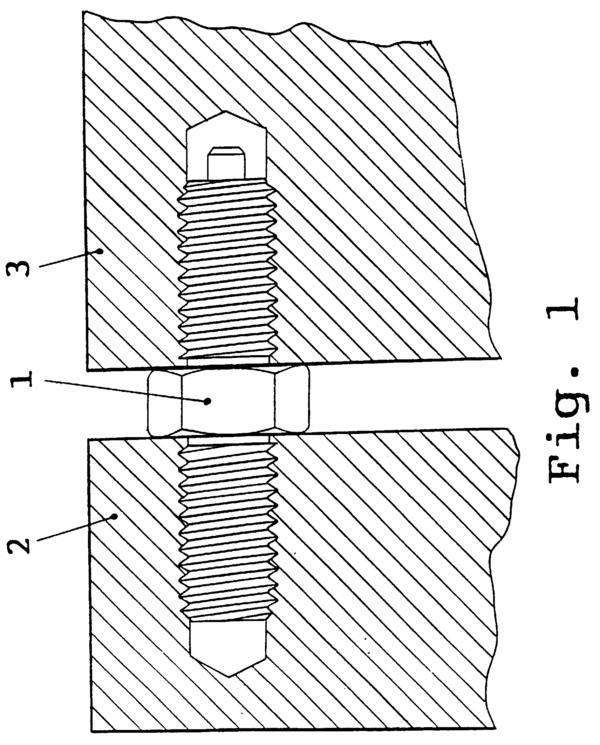

Das Verbindungselement (1) in Fig.1 dient zur lösbaren Verbindung zweier Objekte bzw. Bauteile (2, 3), insbesondere zur Verbindung zweier Objekte (2, 3) an von einer oder von beiden Objektseiten nicht oder nur schwer zugänglichen Stellen, wie beispielsweise Stellwände zum Trennen von Räumen.

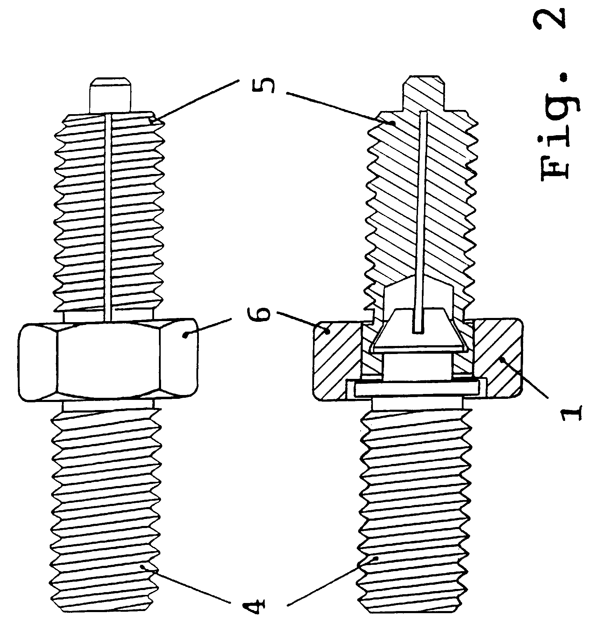

In Fig. 2 ist der innere und äußere Aufbau des in der bevorzugten Ausführungsform aus den drei Teilen Basisschraube (4), Sekundärschraube (5) und Überwurfmutter (6) bestehenden Verbindungselementes (1) im zusammengebauten Zustand dargestellt.

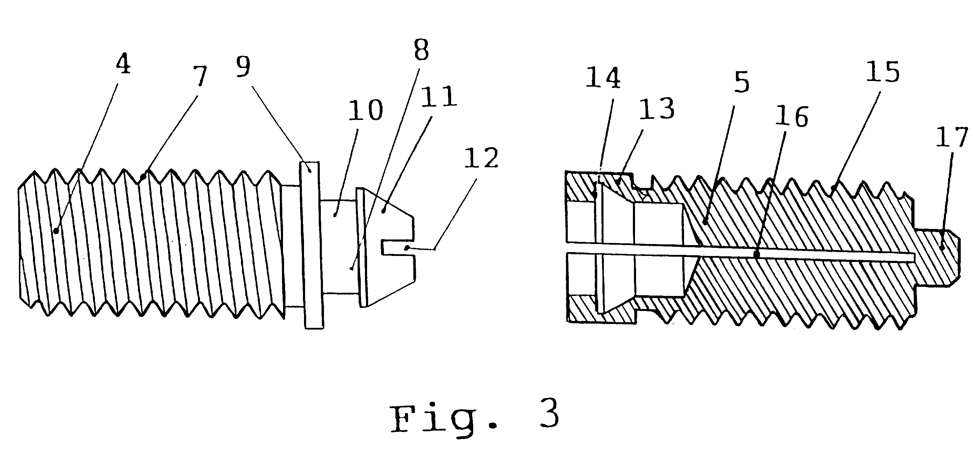

Die in Fig. 3 gezeigte Basisschraube (4) umfaßt ein rechtsgängiges Basisgewinde (7) und einen Anschlußkopf (8), wobei dieser Anschlußkopf (8) wiederum aus einem Anschlag (9), einem Distanzabschnitt (10) und einem in einer bevorzugten Ausführungsform kegelstumpfförmig ausgebildeten Einrastabschnitt (11) besteht, der zur Aufnahme einer nicht gezeigten Schraubendrehvorrichtung, wie zum Beispiel einem Schraubendreher, stirnseitig mit einer Aussparung (12) versehen ist. Diese Aussparung (12) ist in der bevorzugten Ausführungsform ein Schlitz zur Aufnahme der Klinge eines Schlitzschraubendrehers (nicht gezeigt), kann aber je nach Anwendungsfall auch als Innensechskant oder dergleichen ausgebildet sein.

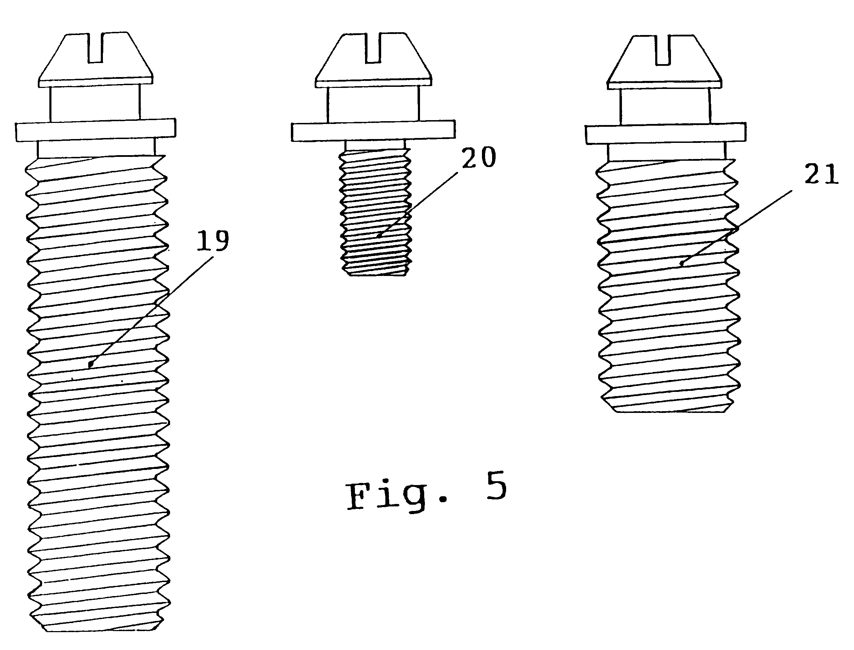

Weitere Ausbildungsformen der Basisschraube (4) sind in der Fig. 5 dargestellt. Während der Anschlußkopf (8) stets gleichbleibend gestaltet ist, kann das Basisgewinde (7) je nach Anwendungsfall verändert werden. Fig. 5 zeigt unterschiedliche Größen und Abmessungen (19, 20, 21) eines rechtsgängigen metrischen Gewindes. Diese besonderen Ausbildungsformen des Basisgewindes (7) stellen nur Beispiele dar. Für den Fachmann ist es offensichtlich, daß das Basisgewinde (7) jede bekannte Gewindeform annehmen kann, insbesondere ist auch die Ausbildung des Basisgewindes (7) bei einem Dübel und einer Holzschraube möglich.

Neben der Basisschraube (4) wird in Fig. 3 ebenfalls der innere und äußere Aufbau der im Längsschnitt dargestellten Sekundärschraube (5) gezeigt, die im wesentlichen aus einem Aufnahmekopf (13) und einem rechtsgängigen Sekundärgewinde (15) besteht. Die Sekundärschraube (5) ist mit einem oder mehreren Schlitzen (16) versehen, die sich bevorzugt vom Aufnahmekopf (13) bis zu einem Zapfen (17) erstrecken, wobei die Sekundärschraube (5) vorzugsweise zweifach in der Art und Weise geschlitzt ist, daß sich in der Draufsicht eine Kreuzform ergibt. Dadurch ist ein Aufweiten möglich, so daß die Sekundärschraube (5) über den Einrastabschnitt (8) der Basisschraube (4) geschoben werden kann. Der Zapfen (17) befindet sich am dem Aufnahmekopf (13) gegenüberliegenden Ende der Sekundärschraube (5), besitzt eine zylindrische Form und weist einen geringeren Durchmesser als das Sekundärgewinde (15) auf. Im Inneren ist die Sekundärschraube (5) hinter einem Vorsprung (14) so gestaltet, daß die Innenkontur des Aufnahmekopfes (13) der Außenkontur des Einrastabschnittes (11) der Basisschraube (4) entspricht.

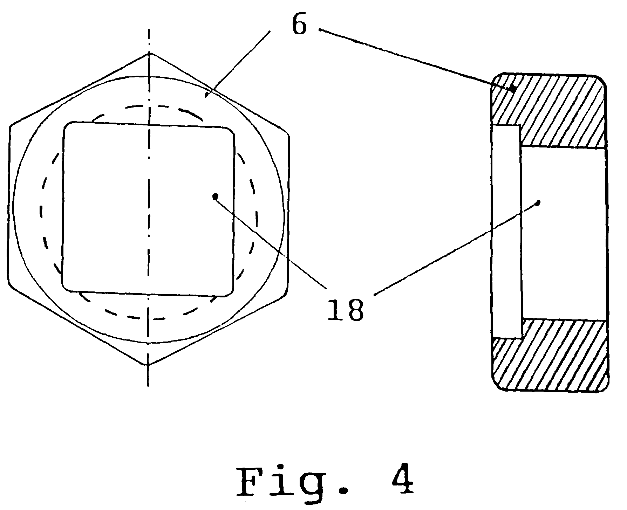

Die in Fig. 4 gezeigte Überwurfmutter (6) besitzt außen in einer bevorzugten Ausführungsform die Kontur einer handelsüblichen Sechskantmutter. Die Innenkontur (18) der Überwurfmutter (6) ist so gestaltet, daß sie der Außenkontur des Aufnahmekopfes (13) der Sekundärschraube (5) zur Aufnahme desselben entspricht, wobei in einer bevorzugten Ausführungsform die Außenkontur des Aufnahmekopfes (13) und die Innenkontur (18) der Überwurfmutter (6) quadratisch sind. Zusätzlich besitzt die Innenkontur (18) der Überwurfmutter (6) noch eine Aussparung zur Aufnahme des Anschlages (9) der Basisschraube (4) im zusammengebauten Zustand.

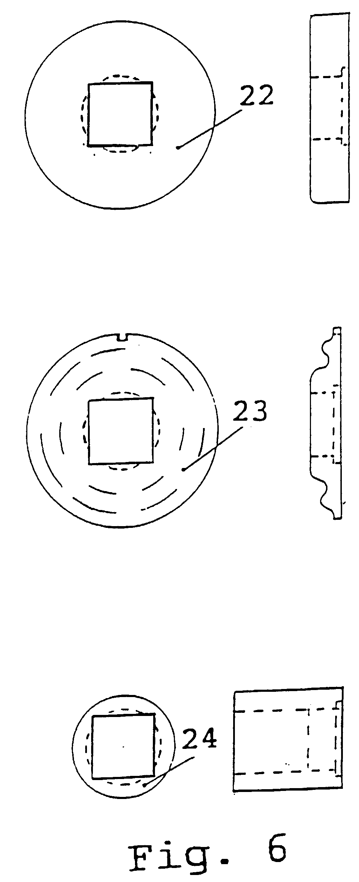

Während diese Innenkontur (18) der Überwurfmutter (6) bei den in Fig. 6 dargestellten verschiedenen Gestaltungsformen der Rosette (6) stets gleich ist, kann die Außenkontur der Überwurfmutter (6) verschiedene Formen und Dimensionen annehmen. Nur beispielsweise sind deshalb in Fig. 6 die Ausgestaltungsformen einer runden Rosette (22), einer Zierrosette (23) und einer Distanzrosette (24) dargestellt.

Der Zusammenbau von zwei Bauteilen bzw. Objekten (2, 3) mit Hilfe des erfindungsgemäßen Verbindungselementes (1) mit beidseitigem Gewinde vollzieht sich schrittweise in folgender Art und Weise.

Die beiden Objekte (2, 3) werden vor dem Zusammenbau an den entsprechenden Stellen mit rechtsgängigen Gewindesacklöchern versehen. Danach wird die Basisschraube (4) bis zum Anschlag (9) in eines der beiden Objekte (2, 3) geschraubt. Der Anschlag (9) soll dabei mit seiner gesamten entsprechend bemessenen Auflagefläche auf der Gewindebohrung aufsitzen, um die Aufgabe eines handelsüblichen Schraubenkopfes zu erfüllen.

Anschließend wird die Sekundärschraube (5) auf die Basisschraube (4) aufgesteckt und zwar in der Art und Weise, daß der Einrastabschnitt (11) der Basisschraube (4) hinter den Vorsprüngen (14) im Aufnahmekopf (13) der Sekundärschraube (5) einrastet. Dabei wird die Sekundärschraube aufgeweitet, d.h. die über den Zapfen (17) verbundenen und durch den oder die Schlitze gebildeten beispielsweise vier Segmente der Sekundärschraube werden dabei aufgespreizt. Nach dem Einrasten des Einrastabschnittes (11) hinter den Vorsprüngen (14) federn die aufgeweiteten Segmente der Sekundärschraube (5) wieder zurück. Die Funktion des Zapfens (17) liegt darin, den Querschnitt am Ende der Sekundärschraube (5) zu verringern, um je nach Material der Sekundärschraube (5) das Aufweiten der Segmente zu erleichtern oder erst zu ermöglichen.

Nachdem die Sekundärschraube (5) mit der Basisschraube (4) eine derartige formschlüssige Verbindung eingegangen ist, wird die Überwurfmutter (6) so über die Sekundärschraube (5) gesteckt, daß der Aufnahmekopf (13) und die Innenkontur (18) der Überwurfmutter (6) ebenfalls eine formschlüssige Verbindung eingehen. Dabei ist die Überwurfmutter (6) so ausgerichtet, daß sie mit ihrer Innenkontur (18) auch den Anschlag (9) der Basisschraube (4) überdeckt. Das erfindungsgemäße Verbindungselement ist jetzt wie in Fig. 2 gezeigt zusammengefügt, wobei sich die rechtsgängige Basisschraube (4) wie oben beschrieben in einem rechtsgängigen Gewindesackloch in einem ersten Objekt (2) befindet.

Durch Drehen der Überwurfmutter (6) schraubt man anschließend die rechtsgängige Sekundärschraube (5) in ein ebenfalls rechtsgängiges Gewindesackloch eines zweiten Objektes (3) und zwar so lange, bis zwischen dem Einrastabschnitt (11) der Basisschraube (4) und der Innenkontur im Aufnahmekopf (13) der Sekundärschraube (5) Kraftschluß vorhanden ist.

Mit der entsprechenden Gestaltung des Anschlußkopfes (8) und der Innenkontur des Aufnahmekopfes (13) lassen sich dabei auch kleinere Fluchtungsfehler der Gewindesacklochbohrungen in den beiden Bauteilen bzw. Objekten (2, 3) ausgleichen. Zusätzlich wird der für die Montage benötigte Platz zwischen den beiden Objekten (2, 3) von der gesamten Länge eines handelsüblichen Verbindungselementes auf etwas mehr als die Hälfte des erfindungsgemäßen Verbindungselementes (1) veringert.

Die Demontage der beiden Bauteile bzw. Objekte (2, 3) vollzieht sich umgekehrt zu der oben beschriebenen Reihenfolge. Dabei erfolgt das Auseinanderziehen von Basisschraube (4) und Sekundärschraube (5) beispielsweise nach einem externen Aufweiten der einzelnen Segmente. Die Sekundärschraube (5) kann aber auch abgeschlagen werden, so daß die Trennung von Basisschraube (4) und Sekundärschraube (5) nach dem Bruch von einem oder mehreren Segmenten der Sekundärschraube (5) erfolgt.

## Patentansprüche

1. Verbindungselement mit beidseitigem Gewinde zur lösbaren Verbindung zweier Bauteile bzw. Objekte, das aus zusammenfügbaren Teilen in Form einer Basisschraube (4), Sekundärschraube (5) und einem vorzugsweise als Überwurfmutter ausgebildeten Überwurfelement (6) besteht, wobei die Basisschraube (4) ein Basisgewinde (7) und einen Anschlußkopf (8) für die Verbindung mit der Sekundärschraube (5) beinhaltet und die Sekundärschraube (5) aus einem Aufnahmekopf (13) zur Aufnahme der Basisschraube (4) und einem Sekundärgewinde (15) gebildet ist, wobei die beiden Gewinde (7, 15) gleiche Gangrichtung aufweisen, **dadurch gekennzeichnet, daß**
der Anschlußkopf (8) einen Anschlag (9), einen Distanzabschnitt (10) und einen Einrastabschnitt (11) umfaßt, der vorzugsweise mit einer Aussparung (12) zur Aufnahme einer Schraubendrehvorrichtung versehen ist;
der Aufnahmekopf (13) zur Aufnahme des Einrastabschnittes (11) der Basisschraube (4) ausgebildet ist;
der Einrastabschnitt (11) kegelstumpfförmig, insbesondere als kegelstumpfförmiger Kopf am gewindefreien Ende der Basisschraube (4) ausgebildet ist; und
die Sekundärschraube (5) zumindest im Bereich ihres Aufnahmekopfes (13) zur Aufnahme des Einrastabschnittes (11) der Basisschraube (4) nachgiebig aufweitbar ist, vorzugsweise mit einem oder mehreren, insbesondere mit vier kreuzförmig angeordneten, Längsschlitzen (16) versehen ist.

2. Verbindungselement nach Anspruch 1, **dadurch gekennzeichnet, daß** die Basisschraube (4) bei identischem Anschlußkopf (8) alternativ verschiedene Ausführungsformen des Basisgewindes (7) aufweisen kann.

3. Verbindungselement nach einem der vorhergehenden Ansprüche, **dadurch gekennzeichnet, daß** die Innenkontur des Aufnahmekopfes (13) hinter Vorsprüngen (14) so gestaltet ist, daß sie der Außenkontur des hinter diesen Vorsprüngen (14) einrastenden Einrastabschnittes (11) entspricht.

4. Verbindungselement nach einem der vorhergehenden Ansprüche, **dadurch gekennzeichnet, daß** sich am Ende des Sekundärgewindes (15) ein vorzugsweise als Zapfen ausgebildeter Verstärkungsfortsatz (17) befindet.

5. Verbindungselement nach einem der vorhergehenden Ansprüche, **dadurch gekennzeichnet, daß** die Innenkontur (18) der Überwurfmutter (6) so ausgebildet ist, daß nach Zusammenfügen der Teile Basisschraube (4), Sekundärschraube (5) und Überwurfmutter (6) zwischen Überwurfmutter (6) und der Außenkontur des Aufnahmekopfes (13) der Sekundärschraube (5) Formschluß besteht und der Anschlag (9) der Basisschraube (4) von der Überwurfmutter (6) überdeckt wird.

6. Verbindungselement nach einem der vorhergehenden Ansprüche, **dadurch gekennzeichnet, daß** die Überwurfmutter (6) verschiedene Außenkonturen aufweist, insbesondere als Rosette ausgebildet ist.

## Claims

1. Connecting element with thread on both sides for a detachable connection of two component parts or objects consisting of joinable parts formed as a base screw (4), a secondary screw (5) and a clamping element (6) preferably built as a clamping nut whereby the base screw (4) comprises a base thread (7) and a joining cap screw (8) for the connection with the secondary screw (5), and the secondary screw (5) consists of a reception cap (13) for the reception of the base screw (4) and a secondary thread (15) the two threads (7, 15) having the same thread path direction. **The above-mentioned facts are marked as follows:**
The joining cap screw (8) comprises a stop (9), a distance section (10) and a locking section (11) preferably having a recess (12) for the reception of a screw turning device.
The reception cap (13) is formed for the reception of the locking section (11) of the base screw (4).
The locking section (11) is formed with a truncated cone, particularly as a head with a truncated cone, at that end of the base screw (4) not having a thread.
The secondary screw (5) can flexibly be widened at least within the region of its reception cap (13) for the reception of the locking section (11) of the base screw (4), and it is preferably provided with one or several longitudinal slots (16), particularly with four longitudinal slots arranged as a cross.

2. Connecting element according to claim 1 **marked by the fact** that the the base screw (4) may dispose of alternatively different execution forms of the base thread (7) with an identical joining cap screw (8).

3. Connecting element according to one of the preceding claims **marked by the fact** that the inner contour of the reception cap (13) behind projections (14) is formed in a way that it corresponds to the outer contour of the locking section (11) locking behind those projections (14).

4. Connecting element according to one of the preceding claims **marked by the fact** that at the end of the secondary thread (15) there is located a reinforcement continuation (17) preferably formed as a pin.

5. Connecting element according to one of the preceding claims **marked by the fact** that the inner contour (18) of the clamping nut (6) is formed in such a way that after connecting the parts base screw (4), secondary screw (5) and clamping nut (6) the clamping nut (6) and the outer contour of the reception cap (13) of the secondary screw (5) fit exactly and the stop (9) of the base screw (4) is covered by the clamping nut (6).

6. Connecting element according to one of the preceding claims **marked by the fact** that the clamping nut (6) disposes of different outer contours and is particularly formed as a rosette.

## Revendications

1. Elément d'assemblage avec un filet bilatéral pour l'assemblage détachable des deux éléments préfabriqués ou objets qui se composent des pièces dans la forme d'une vis de base (4), d'une vis secondaire (5) et d'un élément à chapeau (6) préférablement exécuté comme un écrou à chapeau qui peuvent être assemblées. A cela la vis de base (4) contient un filet de base (7) et une tête de raccordement (8) pour l'assemblage avec la vis secondaire (5), et la vis secondaire (5) est formée d'une tête de récéption (13) pour la réception de la vis de base (4) et d'un filet secondaire (15); les deux filets (7, 15) ont la même direction du pas de Filet; et ces faits sont marqués par le suivant:
La tête de raccordement (8) comprend un arrêt (9), une section de distance (10) et une section à encliquetage (11) qui est préférablement munie d'un évidement (12) pour la réception d'un mécanisme pour tourner des vis.
La tête de réception (13) est formée de manière qu'elle puisse recevoir la section à encliquetage (11) de la vis de base (4).
La section à encliquetage (11) est formée tronconiquement, particulièrement comme une tête tronconique au bout de la vis de base (4) sans filet.
La vis secondaire (5) peut être flexiblement élargie au moins dans la région de sa tête de récéption (13) pour la réception de la section à encliquetage (11) de la vis de base (4). Elle est munie préférablement d'une ou des plusieures fentes longitudinales, mais particulièrement des quatre fentes longitudinales (16) arrangées en forme de croix.

2. Elément d'assemblage conforme à la spécification du brevet 1 marqué par le suivant: La vis de base (4) peut disposer alternativement des formes d'exécution différentes du filet de base (7) avec une tête de raccordement (8) identique.

3. Elément d'assemblage conforme à une des spécification du brevet susmentionnées marqué par le suivant: Le contour intérieur de la tête de réception (13) est formé derrière des saillies (14) de sorte qu'il corresponde au contour extérieur de la section à encliquetage (11) qui encliquète derrière cettes saillies (14).

4. Elément d'assemblage conforme à une des spécifications du brevet susmentionnées marqué par le suivant: Au bout du filet secondaire (15) se trouve un appendice de renforcement (17) préférablement formé comme un tourillon (17).

5. Elément d'assemblage conforme à une des spécifications du brevet susmentionnées marqué par le suivant:
Le contour intérieur (18) de l'écrou à chapeau (6) est formé de sorte qu'il existe un assemblage exactement adapté après l'assemblage des pièces: vis de base (4), vis secondaire (5) et écrou à chapeau (6) entre l'écrou à chapeau (6) et le contour extérieur de la tête de réception (13) de la vis secondaire (5) et que l'arrêt (9) de la vis de base (4) soit couvré de l'écrou à chapeau (6).

6. Elément d'assemblage conforme à une des spécifications du brevet susmentionnées marqué par le suivant:
L'écrou à chapeau (6) dispose des contours extérieurs différents et il est particulièrement formé comme une rosette.
